# EUROPÄISCHE PATENTSCHRIFT

(11) **EP 3 742 057 B1**
(45) Veröffentlichungstag und Bekanntmachung des Hinweises auf die Patenterteilung: **04.11.2026**
(21) Anmeldenummer: 19175696.4
(22) Anmeldetag: 21.05.2019
(51) Int. Cl.: F24D 17/00, F24D 19/10, F16L 9/18, F16L 59/14, F28D 7/10, F28D 21/00, F16L 59/147

(54) **WÄRMERÜCKGEWINNUNG**
HEAT RECOVERY
RÉCUPÉRATION DE CHALEUR

(43) Veröffentlichungstag der Anmeldung: 25.11.2020
(73) Patentinhaber: Georg Fischer JRG AG, 4450 Sissach (CH)
(72) Erfinder: Bürli, Stephan, 4402 Frenkendorf (CH); Cachot, Philippe, 4450 Sissach (CH)
(74) Vertreter: Fenner, Seraina

(56) Entgegenhaltungen:
- EP-A1- 3 339 750
- EP-A2- 1 081 438
- EP-A2- 2 461 100
- WO-A1-98/35178
- WO-A2-2012/025095
- DE-A1- 3 308 447
- DE-A1- 3 830 594

## Beschreibung

Die Erfindung betrifft ein Verfahren zur Wärmerückgewinnung aus einem Warmwasserkreislauf sowie ein Wasserversorgungssystem insbesondere eines Gebäudes, wobei Trinkwasser in einen Boiler eingespeist wird, wobei das vom Boiler abgehende warme Trinkwasser über eine Zuführleitung mindestens einem Verbraucher zugeführt wird, wobei das nicht gezapfte warme Trinkwasser über eine Rückführleitung in den Boiler zurückgeführt wird, wobei die Zu- und Rückführleitung als Doppelrohr ausgebildet sind und das trinkwasserführende Innenrohr von einem Sekundärmedium umgeben wird, wobei das Sekundärmedium die Wärme des warmen Trinkwassers im Innenrohr der Zu- und Rückführleitung aufnimmt, wobei das Sekundärmedium einen Sekundärkreislauf bildet.

In Warmwasserversorgungssystemen in Gebäuden liegt aufgrund der beschränkten Möglichkeiten der Leitungsisolation ein hoher Wärmeenergieverlust vor. Die beschränkten Möglichkeiten der Rohrleitungsisolation liegen einerseits darin, dass die Abmessungen des Rohrleitungsdurchmessers aufgrund einer adäquaten Isolation an ihre Grenzen stossen, das heisst, die Durchmesser würden zu gross werden um in einem Gebäude bzw. den Wänden, Decken und Böden verlegt werden zu können. Andererseits ist es auch eine Frage der Wirtschaftlichkeit, da gut isolierte Rohrleitungen entsprechend teuer sind, was sich dann wiederum über die Jahre in der Energieeinsparung amortisieren lassen muss, was zurzeit mit den bekannten isolierten Rohrleitungssystemen noch nicht der Fall ist.

Bei heutig eingesetzten Systemen beträgt der Energieverlust zwischen 5 bis 10W/m, das heisst bei einem Warmwasserversorgungssystem das 100 m Rohrleitung aufweist, tritt ein jährlicher Energieverlust bis zu ca. 8000 kWh auf.

Ein weiterer negativer Aspekt ist, dass in Bereichen in denen die Kaltwasserleitung in der Nähe der Warmwasserleitung verlegt ist, die Temperatur in der Kaltwasserleitung derart ansteigt, dass sich der Biofilm insbesondere Legionellen auch gerne in der Kaltwasserleitung vermehren.

Die GB 2528173 A offenbart einen Boiler bei dem der Wärmeenergieverlust der äusseren Schicht über die Raumluft einer Wärmepumpe zugeführt wird um den Wirkungsgrad der Anlage zu verbessern.

Dieses System nutzt die ansonsten verlorengehende Abwärme des Boilers, jedoch wird der hohe Wärmeenergieverlust über die Warmwasserleitungen nicht berücksichtigt.

Die WO 98/35178 offenbart ein Doppelrohrsystem bei dem durch das Innenrohr das heisse Wasser vom Boiler an den Verbraucher gebracht wird und über das Mantelrohr wieder zurück an den Boiler. Dazu sind Doppelrohrumkehrstücke vorgesehen, die das Wasser, welches über das Innenrohr an den Verbraucher bringt und das nicht gezapft wird, wieder über das Mantelrohr zurück an den Boiler leitet. Nachteilig hierbei ist, dass die Wärme des Warmwassers im Leitungsrohren nicht genutzt wird sondern, dass sich das heisse Wasser ungenutzt wieder abkühlt und dann an den Boiler zurückgeleitet wird und dort wieder erwärmt wird.

Es ist Aufgabe der Erfindung ein Verfahren und ein damit verbundenes Warmwassersystem vorzuschlagen, das den Wärmeenergieverlust über die Warmwasserrohrleitung rückgewinnt sowie die Hygiene in den Kaltwasserleitungen verbessert.

Diese Aufgabe wird erfindungsgemäss dadurch gelöst, dass das Warmwasserversorgungssystem so ausgebildet ist, dass das umgebende Sekundärmedium im Sekundärkreislauf getrennt vom Trinkwasserkreislauf ist, und die Wärme des das Innenrohr durchströmenden warmen Trinkwassers aufnimmt und an den Boiler zuführt.

Beim erfindungsgemässen Verfahren zur Wärmerückgewinnung aus einem Warmwasserkreislauf insbesondere eines Gebäudes wird Trinkwasser in einen Boiler eingespeist. Das vom Boiler abgehende warme Trinkwasser wird über eine Zuführleitung zu mindestens einem Verbraucher zugeführt, wobei auch mehrere Verbraucher an mehreren vom Hauptstrang abgehenden Strängen angeordnet sein können. Das an den Verbrauchern nicht gezapfte warme Trinkwasser wird über eine Rückführleitung in den Boiler zurückgeführt. Vorzugsweise wird das in den Boiler rückgeführte warme Trinkwasser über die Einspeisung in den Boiler eingespeist und frisches Trinkwasser wird über die Einspeisung für frisches Trinkwasser dem Boiler zugeführt, wodurch eine Vermischung vom warmen Trinkwasser aus der Rückführleitung und dem zugeführten frischen Trinkwasser im Boiler erfolgt. Die Zu- und Rückführleitung des Warmwasserkreislaufs sind als Doppelrohr ausgebildet. Das Doppelrohr weist ein trinkwasserführendes Innenrohr und ein umgebendes Mantelrohr auf. Das trinkwasserführende Innenrohr wird von einem Sekundärmedium umgeben, wobei das in einem Mediumshohlraum zwischen Innen- und Mantelrohr angeordnete Sekundärmedium einen Sekundärkreislauf bildet, wobei der Sekundärkreislauf offen oder geschlossen sein kann. Der Sekundärkreislauf erstreckt sich vorzugsweise entlang des Warmwasserkreislaufs. Das Sekundärmedium nimmt die Wärme des warmen Trinkwassers im Innenrohr der Zu- und Rückführleitung auf, wobei die vom Sekundärmedium aufgenommene Wärme an den Boiler zur Erwärmung des Trinkwassers zugeführt wird, vorzugsweise direkt oder indirekt.

Vorzugsweise wird die Wärme des Sekundärmediums einer Wärmepumpe zugeführt, wobei die von der Wärmepumpe abgegebene Wärme dem Boiler zuführt wird.

Dadurch wird dem Boiler indirekt die Wärmeenergie, welche über die Warmwasserrohrleitung gesammelt wird zugeführt. Das Sekundärmedium, welches das Innenrohr umgibt, sei es, dass es direkt in Kontakt mit der Aussenseite des Innenrohrs steht oder auch wenn eine Isolationsschicht an der Aussenseite des Innenrohres angeordnet ist und die Wärmeleitung reduziert, strömt entlang des Sekundärkreislaufs und transportiert die gesammelte Wärmeenergie zur Wärmepumpe bzw. durch die Konvektion wird mittels des Sekundärmediums der Wärmepumpe Wärmenergie zugeführt.

Vorzugsweise strömt das Sekundärmedium im Sekundärkreislauf in dieselbe oder entgegengesetzte Strömungsrichtung wie die Strömungsrichtung des warmen Trinkwasserkreislaufs.

Es ist vorteilhaft, wenn das Sekundärmedium mittels einer Pumpe oder Absaugung gefördert wird. Vorzugsweise wird bei einem offenen Sekundärkreislauf eine Absaugung eingesetzt, die bei einem Sekundärmedium wie beispielsweise Luft, die Luft angesaugt und nach aussen transportiert um die gewünschte Konvektion zu erhalten. Alternativ ist auch ein geschlossener Sekundärkreislauf denkbar, beispielsweise mit einem flüssigen Sekundärmedium, welches gepumpt wird um eine Zirkulation, welche die Konvektion gewährleistet, anzuregen.

Als vorteilhaft hat sich gezeigt, wenn das Trinkwasser im Warmwasserkreislauf mittels Pumpe zirkuliert wird. Dies sorgt für eine regelmässige Durchströmung und eine Vermeidung einer Stagnation, in welcher sich gerne Legionellen vermehren. Das erfindungsgemässe Warmwasserversorgungssystem insbesondere in einem Gebäude beinhaltend einen Boiler und mindestens einen Verbraucher. Zuführleitungen führen vom Boiler an die Verbraucher. Um das nicht gezapfte warme Trinkwasser zurück in den Boiler zu leiten, führen Rückführleitung vom Verbraucher zum Boiler zurück. Die Zu- und Rückführleitung sind als Doppelrohr mit Innen- und Mantelrohr ausgebildet. Der dazwischenliegende Mediumshohlraum bildet einen Sekundärkreislauf. Das Innenrohr ist von einem Sekundärmedium umgeben, wobei das Sekundärmedium im Mediumshohlraum angeordnet ist und einen Sekundärkreislauf bildet. Das umgebende Sekundärmedium nimmt die Wärme des das Innenrohr durchströmenden, warmen Trinkwassers auf und führt die Wärme dem Boiler zu. Die Wärmeübertragung mittels dem Sekundärmedium erfolgt über erzwungene Konvektion. Dadurch wird die Temperaturdifferenz zwischen der Aussenschicht und der Umgebungsluft kleiner, was weniger Konvektion und schlussendlich weniger Wärmeverlust zur Folge hat.

Erfindungsgemäss ist das Sekundärmedium im Sekundärkreislauf getrennt vom warmen Trinkwasserkreislauf. Die Kreisläufe erfahren somit keine Mediumsdurchmischung.

Als bevorzugte Ausführungsform hat sich gezeigt, wenn das Sekundärmedium ein Fluid ist, vorzugsweise Luft oder eine Flüssigkeit wie beispielsweise Wasser oder Öl. Mit Luft besteht die Möglichkeit, dass der Sekundärkreislauf offen ausgeführt sein kann da immer wieder von aussen neue Luft in den Sekundärkreislauf eingebracht werden kann, beispielsweise durch eine Absaugung kann die Luft aus dem Sekundärkreislauf über die Wärmepumpe an die Umgebung abgesaugt werden und wieder neue Luft aus der Umgebung in das Sekundärsystem angesaugt werden.

Als alternative Ausführungsform hat sich die Verwendung eines flüssigen Sekundärmediums wie Wasser oder Öl wie auch andere Flüssigkeiten gezeigt, wobei der Sekundärkreislauf vorzugsweise geschlossen auszuführen ist. Es ist vorteilhaft wenn eine Strömung des Sekundärmediums zur Erzielung einer Konvektion mittels einer Pumpe erzeugt wird.

Vorzugsweise weist das Warmwasserversorgungssystem eine Wärmepumpe auf, wobei die Wärmepumpe die Wärme aus dem Sekundärkreislauf entnimmt und indirekt dem Boiler zuführt. Das heisst, dass die Wärmeenergie aus dem Sekundärkreislauf dem Kältemittel der Wärmepumpe zugeführt wird, welches dann verdampft, also einem ersten Wärmetauscher entspricht. Dieser Kältemitteldampf wird dann an einen Verdichter weitergeleitet, wodurch das Temperaturniveau des gasförmigen Kältemittels ansteigt, also sehr heiss wird. In einem zweiten Wärmetauscher, dem Verflüssiger, wird das heisse Gas nun kondensiert und seine Wärme an den Boiler abgegeben.

Es ist zu bevorzugen, wenn der Sekundärkreislauf eine Pumpe oder eine Absaugung zur Anregung einer Strömung im Sekundärmedium aufweist. Die Strömung des Sekundärmediums bringt die benötigte erzwungene Konvektion um die Wärmeenergie, welche über die Innenrohre abgegeben wird an den Boiler zu leiten bzw. der Wärmepumpe zuzuführen.

Als bevorzugte Ausführungsform hat sich gezeigt, wenn zwischen dem Innen- und Mantelrohr eine Isolationsschicht angeordnet ist. Das heisst, die Zu- und Rückführleitungen weisen ein trinkwasserführendes Innenrohr auf um das ein beabstandetes Mantelrohr angeordnet ist, vorzugsweise konzentrisch. Zwischen dem Innenrohr und dem Mantelrohr befindet sich der Mediumshohlraum in dem das Sekundärmedium angeordnet ist, wobei vorzugsweise auch eine Isolationsschicht zwischen Innen- und Mantelrohr angeordnet ist, welche am Aussendurchmesser des Innenrohrs oder am Innendurchmesser des Mantelrohres angeordnet ist und der übrige Hohlraum zwischen Innenrohr und Mantelrohr bildet den Mediumshohlraum.

Als vorteilhaft hat sich gezeigt, wenn der Sekundärkreislauf offen oder geschlossen ausgebildet ist. Dies ist vorzugweise auch in Abstimmung mit dem Sekundärmedium zu wählen wie bereits ausführlich beschrieben.

Ausführungsbeispiele der Erfindung werden anhand der Figuren beschrieben, wobei sich die Erfindung nicht nur auf die Ausführungsbeispiele beschränkt. Es zeigen:
- Fig. 1: ein erfindungsgemässes Warmwasserversorgungssystem,
- Fig. 2: ein erfindungsgemässes Warmwasserversorgungssystem mit einer Wärmepumpe mit offenem Sekundärkreislauf,
- Fig. 3: ein erfindungsgemässes Warmwasserversorgungssystem mit einer Wärmepumpe mit geschlossenem Sekundärkreislauf,
- Fig. 4: ein Abschnitt einer Ausführungsform einer Doppelrohrleitung des erfindungsgemässen Warmwasserversorgungssystems und
- Fig. 5: ein Abschnitt einer Ausführungsform einer Doppelrohrleitung des erfindungsgemässen Warmwasserversorgungssystems.

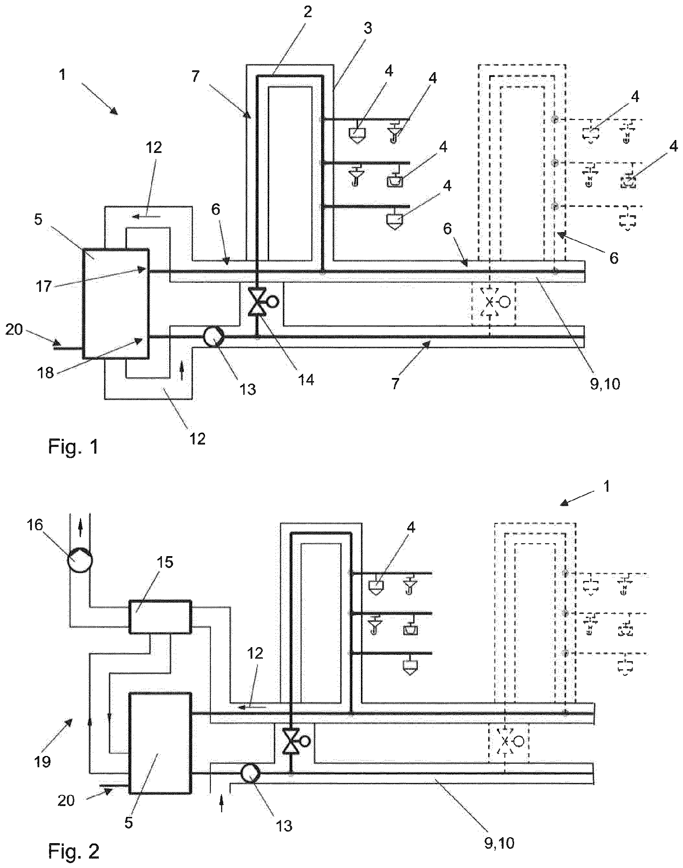

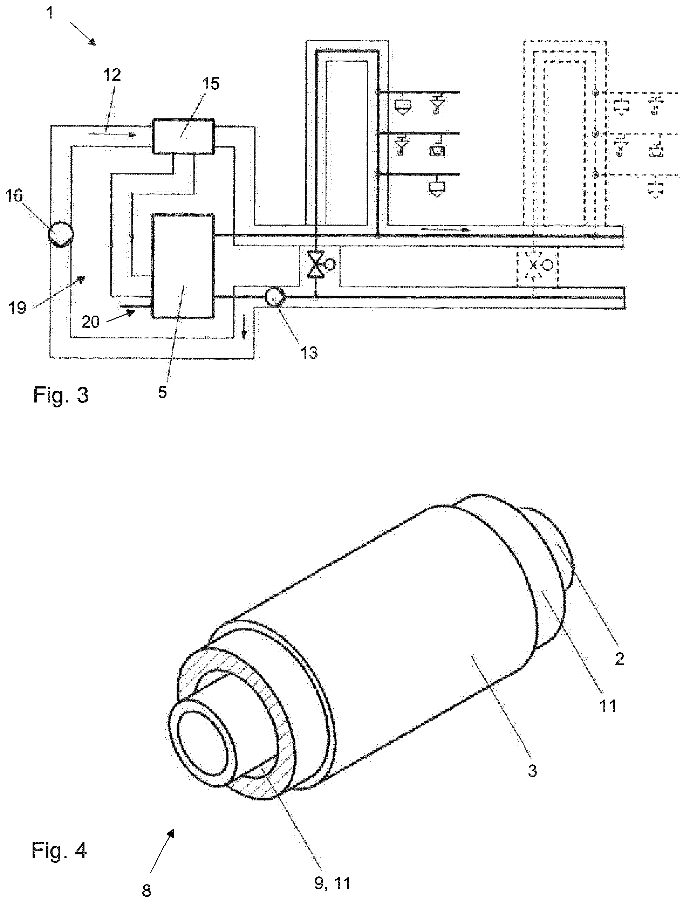

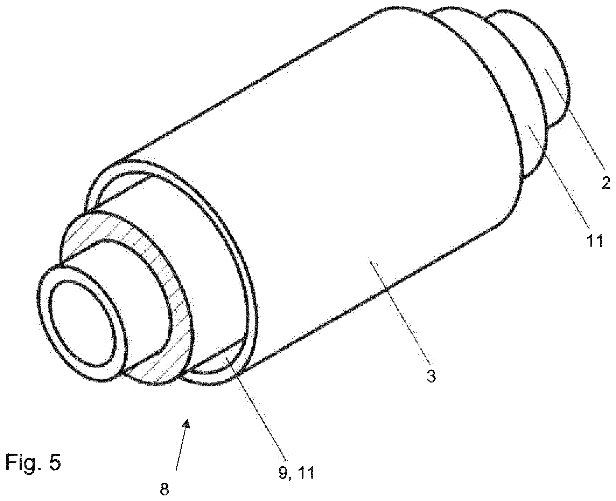

Die in Fig. 1 dargestellte Zeichnung zeigt eine Ausführungsform eines erfindungsgemässen Warmwasserversorgungssystems 1, insbesondere für ein Gebäude. Das Innenrohr 2, welches das warme Trinkwasser an die Verbraucher 4 leitet geht von einem Boiler 5 ab, der das eingespeiste Trinkwasser erwärmt, wobei das warme Trinkwasser über den Austritt 17 am Boiler 5 in die Zuführleitung 6 strömt. Die Zuführleitung 6 bringt das warme Trinkwasser zu den Verbrauchern 4 und die Rückführleitung 7 bringt das nicht gezapfte warme Trinkwasser wieder zurück in den Boiler 5 über die Einspeisung 18. Zudem wird frisches Trinkwasser dem Boiler 5 über die Einspeisung 20 für frisches Trinkwasser zugeführt und die Durchmischung des warmen rückgeführten Trinkwassers und dem frischen Trinkwasser erfolgt im Boiler 5. Die Zu- und Rückführleitung 6, 7 sind als Doppelrohr 8 ausgebildet, das heisst, das warme Trinkwasser wird im Innenrohr 2 zum und vom Verbraucher 4 weg gefördert, wobei das Innenrohr 2 von einem beabstandeten Mantelrohr 3 umgeben ist. Das Innenrohr 2 ist von einem Sekundärmedium 9 umgeben bzw. der Mediumshohlraum 10 zwischen Aussenfläche Innenrohr 2 und Innenfläche Mantelrohr 3 mit einem Sekundärmedium 9 gefüllt, wobei vorzugsweise eine im Mediumshohlraum 10 angeordnete Isolationsschicht 11 vorliegt, die vorzugsweise an der Aussenfläche Innenrohr 2 oder an der Innenfläche Mantelrohr 3 wie in den Figuren 4 und 5 dargestellt angeordnet ist und so den Mediumshohlraum 10 etwas verkleinert und die Rohrleitung isoliert. Selbstverständlich ist aber auch ein Doppelrohr 8 ohne solche zusätzliche Isolationsschicht 11 denkbar. Das Sekundärmedium 9 nimmt die Wärme des warmen Trinkwassers über das Innenrohr 2 auf und transportiert diese an den Boiler 5 und erwärmt so das Trinkwasser im Boiler 5. Das Sekundärmedium 9 ist ein Fluid, vorzugsweise Luft oder eine Flüssigkeit wie vorzugsweise Wasser oder Öl. Die in Fig. 1 dargestellte Ausführungsform zeigt einen geschlossenen Sekundärkreislauf 12, wobei dieser vorzugsweise bei einem Sekundärmedium 9 eingesetzt wird das flüssig ist und so keine Verluste des Sekundärmediums 9 auftreten, wodurch ein kontinuierliches Wiedereinbringen des Sekundärmediums 9 vermieden werden kann und ein Nachfüllen von Zeit zu Zeit durchaus ausreichend ist. Als vorteilhaft hat sich gezeigt, wenn das Trinkwasser mittels einer Pumpe 13 und einem Zirkulationsregler 14, vorzugsweise einem steuerbaren Ventil, im Warmwasserkreislauf gefördert wird, dadurch kann ein regelmässiger Austausch des Trinkwassers gewährleistet werden. In Fig. 1 und 2 strömt das Sekundärmedium 9 in die entgegengesetzte Strömungsrichtung zum warmen Trinkwasserkreislauf, selbstverständlich können das Sekundärmedium 9 und das Trinkwasser auch in dieselbe Richtung strömen wie in Fig. 3 dargestellt. Zudem ist die Strömungsrichtung unabhängig davon zu wählen ob der Sekundärkreislauf 12 offen oder geschlossen ist.

Als alternative Ausgestaltung eines Warmwasserversorgungssystems 1 ist in Fig. 2 ein offener Sekundärkreislauf 12 dargestellt. Zudem weist der Kreislauf 12 eine Wärmepumpe 15 auf. Das Sekundärmedium 9 nimmt, wie zuvor beschrieben, die Wärme des warmen Trinkwassers aus dem Innenrohr 2 auf und transportiert mittels Konvektion an die Wärmepumpe 15. Dadurch wird der Boiler 5 mittels Wärmepumpe 15 erwärmt. Die aus dem warmen Trinkwasser aufgenommene Wärme wird so indirekt dem Boiler zugeführt, bzw. es findet eine Wärmezuführung 19 zwischen der Wärmepumpe 15 und dem Boiler 5 statt. In dem in Fig. 2 gezeigten offenen Sekundärkreislauf 12 wird vorzugsweise Luft als Sekundärmedium 9 verwendet. Um eine Strömung zu erhalten wird im offenen wie auch im geschlossenen Sekundärkreislauf 12 vorzugsweise eine Pumpe oder eine Absaugung 16 eingesetzt, dies gewährleistet die Konvektion, welche die vom Sekundärmedium 9 aufgenommene Wärme direkt oder indirekt dem Boiler 5 bzw. der Wärmepumpe 15 zuführt.

Fig. 3 zeigt eine weitere Ausführungsform eines Warmwasserversorgungssystems 1 wobei hier wieder ein geschlossener Sekundärkreislauf 12 gezeigt ist, bei welchem eine Wärmepumpe 15 miteingebracht ist um die gewünschten Temperaturen für das warme Trinkwasser zu erreichen. Selbstverständlich sind die einzelnen Komponenten des Warmwasserversorgungssystems 1 frei untereinander kombinierbar auch wenn dieses entsprechende Warmwasserversorgungssystem nicht als Ausführungsbeispiel abgebildet ist.

Fig. 4 und 5 zeigen einen Abschnitt eines Doppelrohres 8. Das trinkwasserführende Innenrohr 2 ist in Fig. 4 direkt vom Mediumshohlraum 10 bzw. dem Sekundärmedium 9 im Mediumshohlraum 10 umgeben. Die Isolationsschicht 11 liegt an der Innenfläche des Mantelrohres 3 an und reduziert damit einen ungewollten Wärmeabfluss der angesammelten Wärme im Sekundärmedium 9 auf die Umgebung bzw. Wand, Böden oder Decken in denen die Rohrleitungen verlegt sind. In Fig. 5 wird eine alternative Ausführungsform eines möglichen Doppelrohres 8 gezeigt bei der die Isolierungsschicht 11 an der Aussenfläche des Innenrohres 2 anliegt und der Mediumshohlraum 10 mit dem darin befindet Sekundärmedium 9 sich zwischen der Isolationsschicht 11 und der Innenfläche des Mantelrohres 3 befindet. Selbstverständlich ist auch ein Doppelrohr 8 ohne Isolationsschicht 11 denkbar.

### Bezugszeichenliste

- 1: Warmwasserversorgungssystem
- 2: Innenrohr
- 3: Mantelrohr
- 4: Verbraucher
- 5: Boiler
- 6: Zuführleitung
- 7: Rückführleitung
- 8: Doppelrohr
- 9: Sekundärmedium
- 10: Mediumshohlraum
- 11: Isolationsschicht
- 12: Sekundärkreislauf
- 13: Pumpe Trinkwasser
- 14: Zirkulationsregler
- 15: Wärmepumpe
- 16: Absaugung / Pumpe
- 17: Austritt warmes Trinkwasser
- 18: Einspeisung Rücklauf
- 19: Wärmezuführung Wärmepumpe / Boiler
- 20: Einspeisung frisches Trinkwasser

## Patentansprüche

1. Verfahren zur Wärmerückgewinnung aus einem Warmwasserkreislauf insbesondere eines Gebäudes, wobei Trinkwasser in einen Boiler (5) eingespeist wird, wobei das vom Boiler (5) abgehende warme Trinkwasser über eine Zuführleitung (6) mindestens einem Verbraucher (4) zugeführt wird, wobei das nicht gezapfte warme Trinkwasser über eine Rückführleitung (7) in den Boiler (5) zurückgeführt wird, wobei die Zu- und Rückführleitung (6, 7) durch ein Doppelrohr (8) gebildet werden und das trinkwasserführende Innenrohr (2) von einem Sekundärmedium (9) umgeben wird, wobei das Sekundärmedium (9) die Wärme des warmen Trinkwassers im Innenrohr (2) der Zu- und Rückführleitung (6, 7) aufnimmt, wobei das Sekundärmedium (9) einen Sekundärkreislauf (12) bildet, **dadurch gekennzeichnet, dass** das Sekundärmedium (9) im Sekundärkreislauf (12) getrennt vom Trinkwasserkreislauf angeordnet ist und die vom Sekundärmedium (9) aufgenommene Wärme an den Boiler (5) zur Erwärmung des Trinkwassers zugeführt wird.

2. Verfahren nach Anspruch 1, **dadurch gekennzeichnet, dass** die Wärme des Sekundärmediums (9) einer Wärmepumpe (15) zugeführt wird, wobei die von der Wärmepumpe (15) abgegebenen Wärme (19) dem Boiler (5) zuführt wird.

3. Verfahren nach Anspruch 1 bis 2, **dadurch gekennzeichnet, dass** das Sekundärmedium (9) mittels einer Pumpe oder Absaugung (16) gefördert wird.

4. Verfahren nach einem der Ansprüche 1 bis 3, **dadurch gekennzeichnet, dass** das Trinkwasser mittels Pumpe (13) zirkuliert wird.

5. Verfahren nach Anspruch 1, **dadurch gekennzeichnet, dass** das Sekundärmedium (9) im Sekundärkreislauf (12) dieselbe oder entgegengesetzte Strömungsrichtung wie die Strömungsrichtung des warmen Trinkwasserkreislaufs aufweist.

6. Warmwasserversorgungssystem (1) insbesondere in einem Gebäude beinhaltend einen Boiler (5), mindestens einen Verbraucher (4), eine vom Boiler (5) an den Verbraucher (4) führende Zuführleitung (6) für warmes Trinkwasser, eine vom Verbraucher (4) zum Boiler (5) führende Rückführleitung (7) für nicht gezapftes warmes Trinkwasser, wobei die Zu- und Rückführleitung (6, 7) als Doppelrohr (4) mit einem trinkwasserführenden Innenrohr (2) und einem dieses umgebenden Mantelrohr (3) ausgebildet sind, wobei das Innenrohr (2) von einem Sekundärmedium (9) umgeben ist, welches die Wärme des das Innenrohr (2) durchströmenden warmen Trinkwassers aufnimmt und einen Sekundärkreislauf (12) bildet,
**dadurch gekennzeichnet, dass** das
Warmwasserversorgungssystem (1) so ausgebildet ist, dass das umgebende Sekundärmedium (9) im Sekundärkreislauf (12) getrennt vom Trinkwasserkreislauf angeordnet ist, und die Wärme des das Innenrohr (2) durchströmenden warmen Trinkwassers aufnimmt und an den Boiler (5) zur Erwärmung des Trinkwassers zuführt.

7. Warmwasserversorgungssystem (1) nach Anspruch 6, **dadurch gekennzeichnet, dass** das Sekundärmedium (9) ein Fluid ist, vorzugsweise Luft, Wasser oder Öl.

8. Warmwasserversorgungssystem (1) nach einem der Ansprüche 6 oder 7, **dadurch gekennzeichnet, dass** das Warmwasserversorgungssystem (1) eine Wärmepumpe (15) aufweist, wobei die Wärmepumpe (15) so ausgebildet ist, dass sie die Wärme aus dem Sekundärkreislauf (12) entnimmt und indirekt dem Boiler (5) zuführt.

9. Warmwasserversorgungssystem nach einem der Ansprüche 6 bis 8, **dadurch gekennzeichnet, dass** der Sekundärkreislauf (12) eine Pumpe oder Absaugung (16) zur Anregung einer Strömung im Sekundärmediums (9) aufweist.

10. Warmwasserversorgungssystem (1) nach einem der Ansprüche 6 bis 9, **dadurch gekennzeichnet, dass** zwischen dem Innen- und Mantelrohr (2, 3) eine Isolationsschicht (11) angeordnet ist,

11. Warmwasserversorgungssystem (1) nach einem der Ansprüche 6 bis 10, **dadurch gekennzeichnet, dass** der Sekundärkreislauf (12) offen oder geschlossen ausgebildet ist.

## Claims

1. Method for heat recovery from a hot water circuit, in particular of a building, wherein drinking water is fed into a boiler (5), wherein the hot drinking water exiting the boiler (5) is supplied via a supply line (6) to at least one consumer (4), wherein the hot drinking water that is not drawn off is returned to the boiler (5) via a return line (7), wherein the supply and return lines (6, 7) are formed by a double pipe (8) and the inner pipe (2) carrying the drinking water is surrounded by a secondary medium (9), wherein the secondary medium (9) absorbs the heat from the hot drinking water in the inner pipe (2) of the supply and return lines (6, 7), wherein the secondary medium (9) forms a secondary circuit (12), **characterized in that** the secondary medium (9) is arranged in the secondary circuit (12) separately from the drinking water circuit and the heat absorbed by the secondary medium (9) is supplied to the boiler (5) to heat the drinking water.

2. Method according to Claim 1, **characterized in that** the heat of the secondary medium (9) is supplied to a heat pump (15), wherein the heat (19) output by the heat pump (15) is supplied to the boiler (5).

3. Method according to Claim 1 to 2, **characterized in that** text the secondary medium (9) is conveyed by means of a pump or extraction system (19).

4. Method according to one of Claims 1 to 3, **characterized in that** the drinking water is circulated by means of a pump (13).

5. Method according to Claim 1, **characterized in that** the secondary medium (9) in the secondary circuit (12) has the same or the opposite flow direction as the flow direction of the hot drinking water circuit.

6. Hot water supply system (1), in particular in a building, comprising a boiler (5), at least one consumer (4), a supply line (6) for hot drinking water leading from the boiler (5) to the consumer (4), a return line (7) for hot drinking water that has not been drawn off leading from the consumer (4) to the boiler (5), wherein the supply and return lines (6, 7) are formed as a double pipe (4) comprising an inner pipe (2) which carries drinking water and a casing pipe (3) surrounding it, wherein the inner pipe (2) is surrounded by a secondary medium (9) which absorbs the heat from the hot drinking water flowing through the inner pipe (2) and forms a secondary circuit, **characterized in that** the hot water supply system (1) is formed so that the surrounding secondary medium (9) is arranged in the secondary circuit (12) separately from the drinking water circuit and absorbs the heat from the hot drinking water flowing through the inner pipe (2) and supplies it to the boiler (5) for heating the drinking water.

7. Hot water supply system (1) according to Claim 6, **characterized in that** the secondary medium (9) is a fluid, preferably air, water, or oil.

8. Hot water supply system (1) according to one of Claims 6 or 7, **characterized in that** the hot water supply system (1) has a heat pump (15), wherein the heat pump (15) is formed such that it removes the heat from the secondary circuit (12) and supplies it indirectly to the boiler (5).

9. Hot water supply system (1) according to one of Claims 6 to 8, **characterized in that** the secondary circuit (12) has a pump or extraction system (16) for inducing a flow in the secondary medium (9).

10. Hot water supply system (1) according to one of Claims 6 to 9, **characterized in that** an insulation layer (11) is arranged between the inner pipe and the casing pipe (2, 3).

11. Hot water supply system (1) according to one of Claims 6 to 10, **characterized in that** the secondary circuit (12) is formed to be open or closed.

## Revendications

1. Procédé de récupération de chaleur d'un circuit d'eau chaude, en particulier d'un bâtiment, de l'eau potable étant injectée dans une chaudière (5), l'eau potable chaude sortant de la chaudière (5) étant amenée à au moins un consommateur (4) par une conduite d'amenée (6), l'eau potable chaude non soutirée étant ramenée dans la chaudière (5) par une conduite de retour (7), la conduite d'amenée et la conduite de retour (6, 7) étant formées par un double tube (8) et le tube intérieur (2) guidant l'eau potable étant entouré d'un milieu secondaire (9), le milieu secondaire (9) absorbant la chaleur de l'eau potable chaude dans le tube intérieur (2) de la conduite d'amenée et la conduite de retour (6, 7), le milieu secondaire (9) formant un circuit secondaire (12), **caractérisé en ce que** le milieu secondaire (9) est disposé dans le circuit secondaire (12) séparément du circuit d'eau potable, et la chaleur absorbée par le milieu secondaire (9) est amenée à la chaudière (5) pour chauffer l'eau potable.

2. Procédé selon la revendication 1, **caractérisé en ce que** la chaleur du milieu secondaire (9) est amenée à une pompe à chaleur (15), la chaleur (19) émise par la pompe à chaleur (15) étant amenée à la chaudière (5).

3. Procédé selon les revendications 1 à 2, **caractérisé en ce que** le milieu secondaire (9) est transporté au moyen d'une pompe ou d'un dispositif d'évacuation par aspiration (16).

4. Procédé selon l'une des revendications 1 à 3, **caractérisé en ce que** l'eau potable est mise en circulation au moyen d'une pompe (13).

5. Procédé selon la revendication 1, **caractérisé en ce que** le milieu secondaire (9) dans le circuit secondaire (12) présente le même sens d'écoulement que le sens d'écoulement du circuit d'eau potable chaude ou le sens d'écoulement opposé.

6. Système d'alimentation en eau chaude (1), en particulier dans un bâtiment renfermant une chaudière (5), au moins un consommateur (4), une conduite d'amenée (6) allant de la chaudière (5) au consommateur (4) pour l'eau potable chaude, une conduite de retour (7) allant du consommateur (4) à la chaudière (5) pour l'eau potable chaude non soutirée, la conduite d'amenée et la conduite de retour (6, 7) étant formées comme un double tube (4) avec un tube intérieur (2) guidant l'eau potable et un tube extérieur (3) entourant celui-ci, le tube intérieur (2) étant entouré par un milieu secondaire (9) qui absorbe la chaleur de l'eau potable chaude s'écoulant à travers le tube intérieur (2) et formant un circuit secondaire (12), **caractérisé en ce que** le système d'alimentation en eau chaude (1) est formé de telle sorte que le milieu secondaire (9) environnant est disposé dans le circuit secondaire (12) séparément du circuit d'eau potable, et absorbe la chaleur de l'eau potable chaude s'écoulant à travers le tube intérieur (2) et l'amène à la chaudière (5) pour chauffer l'eau potable.

7. Système d'alimentation en eau chaude (1) selon la revendication 6, **caractérisé en ce que** le milieu secondaire (9) est un fluide, de préférence de l'air, de l'eau ou de l'huile.

8. Système d'alimentation en eau chaude (1) selon l'une des revendications 6 ou 7, **caractérisé en ce que** le système d'alimentation en eau chaude (1) comporte une pompe à chaleur (15), la pompe à chaleur (15) étant formée de telle sorte qu'elle prélève la chaleur du circuit secondaire (12) et l'amène indirectement à la chaudière (5).

9. Système d'alimentation en eau chaude selon l'une des revendications 6 à 8, **caractérisé en ce que** le circuit secondaire (12) comporte une pompe ou un dispositif d'évacuation par aspiration (16) pour exciter un flux dans le milieu secondaire (9).

10. Système d'alimentation en eau chaude (1) selon l'une des revendications 6 à 9, **caractérisé en ce qu'**une couche isolante (11) est disposée entre le tube intérieur et le tube extérieur (2, 3).

11. Système d'alimentation en eau chaude (1) selon l'une des revendications 6 à 10, **caractérisé en ce que** le circuit secondaire (12) est ouvert ou fermé.
